# FASCICULE DE BREVET EUROPEEN

(11) **EP 1 039 390 B1**
(45) Date de publication et mention de la délivrance du brevet: **20.08.2003**
(21) Numéro de dépôt: 00400730.8
(22) Date de dépôt: 16.03.2000
(51) Int. Cl.: G06F 11/25

(54) **Dispositif d'aide au diagnostic d'un dysfonctionnement d'un véhicule automobile**
Hilfsvorrichtung zur Diagnose einer Kraftfahrzeugstörung
Assist device for diagnosing the dysfunctioning of a motor vehicle

(30) Priorité: 19.03.1999 FR 9903438
(43) Date de publication de la demande: 27.09.2000
(73) Titulaire: SAGEM SA, 75116 Paris (FR)
(72) Inventeur: Knipper, Yves, 95490 Vaureal (FR); Fleury, Michel, 92100 Boulogne (FR)
(74) Mandataire: Bloch, Gérard

(56) Documents cités:
- EP-A- 0 304 848
- US-A- 5 313 388

## Description

La présente invention concerne les diagnostics de dysfonctionnements de véhicules automobiles.

Pour effectuer un tel diagnostic, un garagiste recueille les symptômes de dysfonctionnements perçus par le conducteur du véhicule puis, à l'aide de ces symptômes, il recherche le ou les dysfonctionnements, en examinant le véhicule visuellement et/ou à l'aide d'outils de mesure physique et de lecture électronique. Une telle méthode de diagnostic s'avère lourde à mettre en oeuvre et de surcroît peu fiable. En effet, elle ne permet pas de trouver systématiquement les dysfonctionnements. Par ailleurs, la diversité croissante et l'évolution rapide des systèmes électroniques des véhicules rendent les diagnostics de dysfonctionnements et par conséquent les dépannages de plus en plus complexes.

On connaît par le document US-A-5 313 388 un dispositif d'aide au diagnostic d'au moins un dysfonctionnement d'un véhicule automobile, comprenant des moyens d'acquisition de données symptomatiques fournies par un utilisateur du véhicule, des moyens d'acquisition de données de fonctionnement du véhicule, qui permet d'automatiser l'élaboration de diagnostics par l'introduction de moyens électroniques et informatiques. Ce dispositif de l'art antérieur utilise une base de corrélation de données symptomatiques et de problèmes de fonctionnement et propose un diagnostic reposant sur une technique de test du type mesure guidée de points tests.

La présente invention vise à faciliter l'établissement d'un diagnostic de dysfonctionnement d'un véhicule automobile et à rendre ce diagnostic plus fiable et plus rapide.

A cet effet, l'invention concerne un dispositif d'aide au diagnostic d'au moins un dysfonctionnement d'un véhicule automobile, comprenant des moyens d'acquisition de données symptomatiques fournies par un utilisateur du véhicule, des moyens d'acquisition de données de fonctionnement du véhicule, des moyens d'acquisition de données symptomatiques antérieures,relatives à des symptômes recueillis dans le passé causés par des dysfonctionnements connus, des premiers moyens d'aide au diagnostic par application, pour chaque donnée de fonctionnement du véhicule, d'au moins une méthode prédéfinie d'aide au diagnostic, et des seconds moyens d'aide au diagnostic par comparaison des données de l'un au moins des deux groupes, comprenant respectivement les données symptomatiques fournies par l'utilisateur du véhicule et les données de fonctionnement du véhicule, avec les données symptomatiques antérieures.

Par "données symptomatiques antérieures", on entend désigner des données relatives à des symptômes recueillis dans le passé sur des véhicules automobiles et pour chacun desquels au moins un dysfonctionnement, qui en est la cause, est connu.

Avantageusement, il est prévu des moyens de détection, parmi les données de fonctionnement du véhicule, de données de fonctionnement défectueux.

Le dispositif de l'invention, dans cette forme de réalisation, est destiné à acquérir des données de fonctionnement défectueux, fournies par le véhicule, ainsi que des données symptomatiques, fournies par l'utilisateur du véhicule, et à utiliser ces deux types de données pour diagnostiquer le dysfonctionnement soit par application d'au moins une méthode de diagnostic prédéfinie, soit par comparaison des données symptomatiques fournies par l'utilisateur du véhicule et/ou des données de fonctionnement défectueux du véhicule avec les données symptomatiques antérieures. Grâce à cela, le diagnostic est établi non seulement sur la base des données de fonctionnement défectueux du véhicule, mais également sur celle des données symptomatiques fournies par l'utilisateur du véhicule, représentatives des symptômes réellement observés par l'utilisateur. Les sources d'informations, permettant d'établir un diagnostic, sont ainsi diverses et extrêmement riches.

Dans une forme de réalisation particulière, les premiers moyens d'aide au diagnostic comprennent des moyens pour sélectionner, pour chacune desdites données de fonctionnement défectueux, l'une au moins d'une pluralité de méthodes d'aide au diagnostic qu'il convient d'appliquer.

A chaque donnée de fonctionnement défectueux, on associe ainsi une ou plusieurs méthodes de diagnostic qu'il convient le mieux d'appliquer. Grâce à cela, le processus d'aide au diagnostic est à la fois rapide et efficace.

De préférence, les premiers moyens d'aide au diagnostic comprennent des moyens pour hiérarchiser les données de fonctionnement défectueux du véhicule, suivant un ordre dans lequel lesdites données doivent être prises en compte pour appliquer des méthodes d'aide au diagnostic.

Cela permet de prendre en compte les données de fonctionnement défectueux les unes à la suite des autres, suivant un ordre permettant d'identifier le dysfonctionnement de façon optimale.

Les premiers moyens d'aide au diagnostic peuvent comprendre des moyens pour appliquer une méthode d'aide au diagnostic utilisant des arbres de décisions, des moyens pour appliquer une méthode d'aide au diagnostic utilisant un système expert ou des moyens pour appliquer une méthode d'aide au diagnostic destinée à préconiser l'utilisation d'outils de prise de données de fonctionnement du véhicule.

Avantageusement, les moyens d'acquisition de données symptomatiques antérieures comprennent des moyens de liaison à des moyens distants de stockage desdites données.

Grâce à cela, les données symptomatiques antérieures peuvent être mises à jour fréquemment par un central distant, en liaison avec une pluralité de garagistes et centralisant tous les symptômes de dysfonctionnement recueillis par ces garagistes.

De préférence, il est prévu des moyens de commande destinés à activer les premiers moyens d'aide au diagnostic prioritairement aux seconds moyens d'aide au diagnostic.

Les données de fonctionnement défectueux du véhicule, généralement plus fiables et plus faciles à exploiter que les données symptomatiques fournies par un utilisateur du véhicule, sont ainsi prises en compte en priorité.

Dans une forme de réalisation particulière, il est prévu un premier module d'interface, de liaison à au moins un élément du véhicule destiné à fournir des données de fonctionnement du véhicule, un second module d'interface, de liaison à des outils de prise de données de fonctionnement du véhicule, et une unité centrale intégrant les premiers et les seconds moyens d'aide au diagnostic.

L'invention sera mieux comprise à l'aide de la description suivante d'une forme de réalisation particulière du dispositif d'aide au diagnostic de l'invention, en référence au dessin annexé sur lequel:
- la figure 1 représente un schéma de l'architecture du dispositif et
- la figure 2 représente un schéma bloc fonctionnel de l'unité centrale du dispositif de la figure 1.

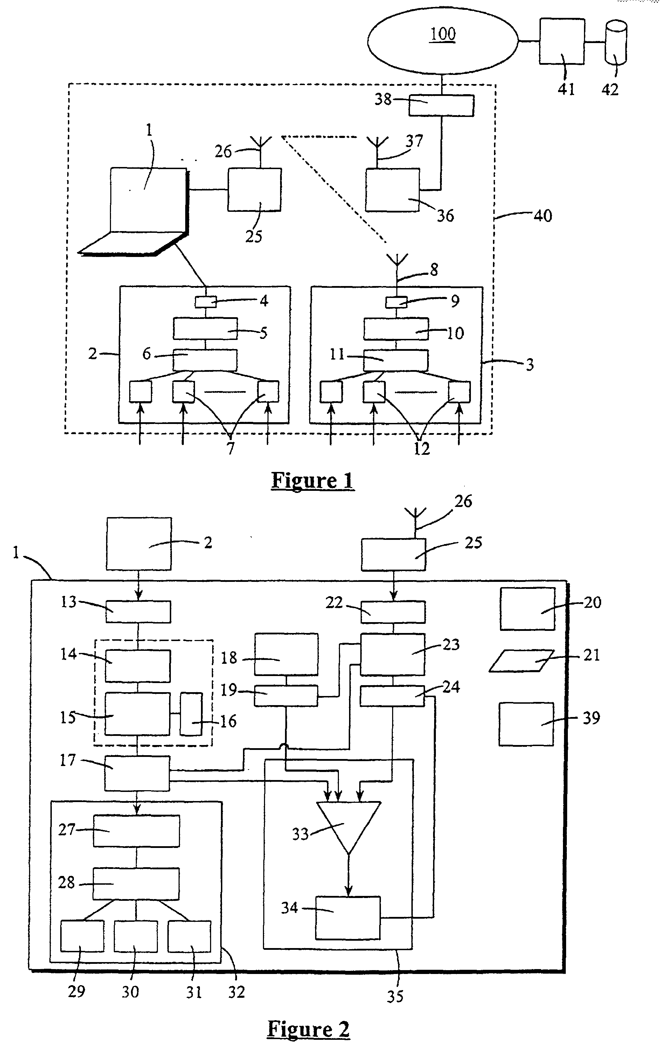

Le dispositif 40 d'aide au diagnostic, représenté sur la figure 1, permet d'établir des diagnostics de dysfonctionnements de véhicules automobiles. Il comprend une unité centrale 1 d'aide au diagnostic, en l'espèce un ordinateur PC (personal computer - ordinateur personnel) portable, un premier module d'interface 2, de liaison à des éléments périphériques, destinés à fournir des données de fonctionnement du véhicule, et un second module d'interface 3, de liaison à des outils de mesure physique.

On notera d'emblée que par "donnée de fonctionnement", on entend faire référence à une caractéristique de fonctionnement du véhicule, telle que la température de l'eau par exemple.

Le premier module d'interface 2 comprend un bloc 4 de liaison filaire à l'unité centrale 1, ici un bus USB (Universal Serial Bus - bus série universel), des blocs 7 de liaison filaire aux éléments du véhicule, destinés à fournir des données de fonctionnement du véhicule, un bloc de contrôle 6, ici un microcontrôleur, de gestion des différents éléments du véhicule et un bloc 5 d'interface de communication entre le microcontrôleur 6 et l'unité centrale 1.

Les éléments périphériques, destinés à fournir des données de fonctionnement du véhicule, comprennent
- des organes de commande du véhicule, en l'espèce des calculateurs (de climatisation, de boîte automatique, de contrôle moteur, de suspension, d'autoradio, d'antiblocage de roue, etc.) et
- des bus multiplexés de transmission de données, en l'espèce des bus normalisés CAN (Controller Area Network - réseau contrôleur) et VAN (Vehicle Area Network - réseau véhicule), par le biais desquels certains calculateurs du véhicule se communiquent des données de fonctionnement du véhicule.

Le microcontrôleur 6 est destiné à gérer les différents éléments du véhicule, afin notamment d'acquérir des données de fonctionnement du véhicule, fournies par ces éléments.

Le bloc d'interface de communication 5 est relié au bloc 4 de liaison à l'unité centrale 1 et au microcontrôleur 6, et destiné, sur commande de l'unité centrale 1, à commander l'acquisition, par le biais du microcontrôleur 6, de données de fonctionnement du véhicule, fournies par les éléments du véhicule reliés aux blocs de liaison 7, et à transmettre ces données à l'unité centrale 1.

Les blocs 7 de liaison, reliés aux organes de commande du véhicule, le sont par l'intermédiaire d'une prise de diagnostic du véhicule à laquelle ces organes de commande sont reliés.

Le second module d'interface 3 comprend un bloc radio 9 de liaison à l'unité centrale 1, pourvu d'une antenne radio 8, des blocs 12 de liaison à des outils périphériques externes de prise de données de fonctionnement du véhicule, en l'espèce des outils de mesure physique et des outils de lecture électronique, un bloc de contrôle 11, en l'espèce un microcontrôleur, de gestion des outils de prise de données de fonctionnement du véhicule, et un bloc 10 d'interface de communication entre l'unité centrale 1 et les outils de prise de données de fonctionnement de véhicule.

Les outils de mesure physique intègrent ici les fonctions de mesure suivantes: ohmmètre, voltmètre, ampèremètre, oscilloscope, thermomètre et prise de mesures relatives à l'allumage d'un véhicule automobile.

Le microcontrôleur 11 est destiné à gérer les différents outils de prise de données de fonctionnement du véhicule, afin de commander des mesures physiques, l'acquisition des grandeurs physiques mesurées et des lectures de données de fonctionnement du véhicule.

Le bloc d'interface de communication 10 est relié au bloc de liaison 9 et au microcontrôleur 11 et destiné, sur commande de l'unité centrale 1, à commander, par le biais du microcontrôleur 11, des prises de données de fonctionnement de véhicule par les outils reliés aux blocs de liaison 12.

L'unité centrale 1, représentée sur la figure 2, comprend un bloc 13 de liaison au module d'interface 2, un bloc 22 de liaison filaire à un bloc radio externe 25, de liaison à un réseau 100 de transmission de données et au module d'interface 3, et une interface homme-machine.

L'interface homme-machine comporte un écran d'affichage 20, un clavier de saisie 21 et un bloc d'interface utilisateur 39, destiné à exécuter une application de gestion d'une interface utilisateur, c'est-à-dire une interface graphique de communication entre l'unité centrale 1 et un utilisateur du dispositif 40, destinée à s'afficher à l'écran 20.

Le bloc 13 de liaison au module d'interface 2 est relié à un bloc 14 d'acquisition de données de fonctionnement du véhicule, lui-même relié à un bloc 15 de détection de données de fonctionnement défectueux du véhicule. Le bloc de détection 15 est relié à une mémoire 16, contenant des données de bon fonctionnement du véhicule, et destiné à comparer ces données de bon fonctionnement aux données de fonctionnement du véhicule, acquises par le biais du module d'interface 2, afin de déterminer parmi les données acquises de fonctionnement du véhicule, celles correspondant à un fonctionnement défectueux, autrement dit à un défaut de fonctionnement, du véhicule. L'ensemble des blocs 14-16 constitue ainsi un module d'acquisition de données de fonctionnement défectueux du véhicule. Une mémoire 17 de stockage des données de fonctionnement défectueux du véhicule est reliée au bloc de détection 15.

L'unité centrale 1 comprend également un bloc 18 d'acquisition de données symptomatiques de dysfonctionnement, fournies par un utilisateur du véhicule. Le bloc d'acquisition 18 est destiné à exécuter une application de gestion d'une interface utilisateur de saisie de données symptomatiques, fournies par un utilisateur, destinée à s'afficher à l'écran 20. Le bloc d'acquisition 18 est relié à une mémoire 19 de stockage des données symptomatiques fournies par l'utilisateur.

Le bloc 22 de liaison au bloc radio 25 est relié à un bloc 23 d'acquisition de données symptomatiques antérieures et de données de dysfonctionnements correspondants.

On notera ici que les données symptomatiques antérieures et les données de dysfonctionnements correspondent respectivement à des symptômes de dysfonctionnements et aux dysfonctionnements qui en sont la cause. Un central distant 41 gère et met régulièrement à jour une base de données 42 contenant des données symptomatiques antérieures et des données de dysfonctionnements correspondants. Ces données sont collectées régulièrement auprès d'un réseau de garagistes et centralisées par le central 41.

Le bloc d'acquisition 23 est destiné à appeler le central distant 41 et à lui adresser une requête de téléchargement de données symptomatiques antérieures et ici des données de dysfonctionnements correspondants, à travers le réseau 100 de transmission de données.

Le bloc d'acquisition 23 est relié aux mémoires 17 et 19 de stockage de données de fonctionnement défectueux du véhicule et de données symptomatiques fournies par un utilisateur, respectivement. Le bloc 23 est destiné à établir des critères de sélection de données symptomatiques antérieures, pertinentes à l'égard des données de fonctionnement défectueux du véhicule et des données symptomatiques fournies par un utilisateur, et à utiliser ces critères pour sélectionner, parmi toutes les données symptomatiques antérieures de la base de données 42, les seules données pertinentes, par envoi d'une requête de téléchargement de ces seules données symptomatiques antérieures pertinentes.

Une mémoire 24 de stockage de données symptomatiques antérieures, pertinentes à l'égard des données de fonctionnement défectueux du véhicule et des données symptomatiques fournies par un utilisateur, et de données de dysfonctionnements correspondantes est reliée au bloc d'acquisition 23.

L'unité centrale 1 comprend également deux modules d'aide au diagnostic 32, 35.

Le premier module d'aide au diagnostic 32 comprend
- trois blocs 29-31 destinés chacun à exécuter une méthode prédéfinie d'aide au diagnostic,
- un bloc de hiérarchisation 27 destiné à hiérarchiser les données de fonctionnement défectueux du véhicule, suivant un ordre prédéfini dans lequel ces données doivent être prises en compte pour appliquer les méthodes d'aide au diagnostic et
- un bloc de sélection 28 destiné à sélectionner, pour chacune des données de fonctionnement défectueux, l'une au moins des trois méthodes d'aide au diagnostic qu'il convient d'appliquer, compte tenu du type de donnée considérée.

La hiérarchisation est telle que vont être prises en compte, dans l'ordre de priorité suivant:
- les données relatives aux dysfonctionnements amont;
- les données relatives aux dysfonctionnements les plus simples, les plus rapides ou les moins coûteux à réparer et
- les données relatives aux dysfonctionnements les plus probables.

Les dysfonctionnements dits "amont" sont des dysfonctionnements susceptibles de provoquer d'autres dysfonctionnements dits "aval". Ils sont déterminés par un arbre de défaillance permettant d'évaluer la fiabilité du système consistant dans l'ensemble des éléments du véhicule.

Le bloc de hiérarchisation 27 est relié à la mémoire 17 de stockage de données de fonctionnement défectueux du véhicule et au bloc de sélection 28.

Les méthodes d'aide au diagnostic (29-31) sont propres à un constructeur particulier A de véhicules automobiles et destinées à aider un utilisateur du dispositif 40 à identifier un ou plusieurs dysfonctionnements à l'origine de symptômes décelés.

Le bloc 29 d'aide au diagnostic utilise des arbres de décisions et des tables d'états de fonctionnement d'éléments du véhicule. Il est destiné à donner des directives à un utilisateur du dispositif 40, pour qu'il exécute, par étapes successives, des opérations de vérification du fonctionnement du véhicule, les opérations exécutées lors de ces étapes pouvant dépendre des résultats obtenus lors d'étapes précédentes.

Le bloc 30 d'aide au diagnostic utilise un système expert, destiné à simuler des raisonnements et à prendre des décisions, en utilisant des modèles, afin d'identifier le ou les dysfonctionnements.

Le bloc 31 d'aide au diagnostic est quant à lui destiné à recommander à l'utilisateur du dispositif 40 d'utiliser certains des outils de mesure physique et/ou de lecture électronique, reliés au module d'interface 3, de façon à ce qu'il identifie le dysfonctionnement, de façon optimale.

Le second module d'aide au diagnostic 35 comprend un bloc de comparaison 33 à trois entrées et une sortie.

En entrée, le bloc de comparaison 33 est relié
- à la mémoire 24 de stockage de données symptomatiques antérieures pertinentes,
- à la mémoire 19 de stockage de données symptomatiques fournies par un utilisateur et
- à la mémoire 17 de stockage de données de fonctionnement défectueux du véhicule.

En sortie, le bloc de comparaison 33 est relié à un bloc 34 de détermination de dysfonctionnements, lui-même relié à la mémoire 24 de stockage de données symptomatiques antérieures pertinentes et de données de dysfonctionnement correspondantes.

Le bloc de comparaison 33 est destiné à comparer des données symptomatiques fournies par un utilisateur et/ou des données de fonctionnement défectueux du véhicule avec des données symptomatiques antérieures. En cas de similitude entre, d'une part, une donnée de fonctionnement défectueux du véhicule ou une donnée symptomatique d'utilisateur et, d'autre part, une donnée symptomatique antérieure, le bloc 34 est destiné à extraire de la mémoire 24 la donnée de dysfonctionnement correspondant à cette donnée symptomatique antérieure afin d'indiquer le dysfonctionnement identifié à l'utilisateur du dispositif 40.

L'unité centrale 1 comprend en outre un bloc central de commande, non représenté, auquel tous les éléments de l'unité centrale 1 sont reliés, et destiné
- à activer le premier module d'aide au diagnostic 32 prioritairement au second module d'aide au diagnostic 35 et
- à activer le second module d'aide au diagnostic 35 dans le cas où aucune donnée de fonctionnement défectueux du véhicule n'a été acquise et dans le cas où le premier module 32 d'aide au diagnostic n'a permis d'identifier aucun dysfonctionnement.

Le bloc radio 25, pourvu d'une antenne radio 26, est relié par liaison radio à un autre bloc radio 36, lui-même pourvu d'une antenne radio 37, et relié par liaison filaire au réseau de transmission de données 100, avec interposition d'un modem 38.

Après la description structurelle du dispositif d'aide au diagnostic, son fonctionnement va maintenant être explicité, pour l'identification d'un dysfonctionnement d'un véhicule automobile du constructeur A.

Un utilisateur du dispositif 40 recueille des données symptomatiques, fournies par un utilisateur du véhicule, et les saisit à l'aide de l'interface utilisateur de saisie, gérée par le bloc d'acquisition 18 et s'affichant à l'écran 20, et à l'aide du clavier 21. Le bloc d'acquisition 18 reçoit ces données et les mémorise dans la mémoire 19.

Par ailleurs, l'utilisateur du dispositif 40 relie le module d'interface 2 à des calculateurs et à des bus multiplexés CAN et VAN du véhicule et commande l'acquisition de données de fonctionnement du véhicule, à l'aide de l'interface utilisateur 39. Sur commande du bloc d'acquisition 14, le bloc d'interface 5 commande l'acquisition, par le biais du microcontrôleur 6, de données de fonctionnement du véhicule, fournies par les calculateurs et les bus multiplexés, et transmet ces données au bloc d'acquisition 14. Le bloc de détection 15 détecte, parmi les données de fonctionnement du véhicule, celles correspondant à un fonctionnement défectueux et mémorise ces données de fonctionnement défectueux dans la mémoire 17.

L'utilisateur du dispositif 40 lance ensuite l'exécution du processus d'aide au diagnostic, par le biais de l'interface utilisateur 39. Le bloc central de commande active alors le premier module 32 d'aide au diagnostic.

Dans le cas où une pluralité de données de fonctionnement défectueux sont mémorisées dans la mémoire 17, le bloc de hiérarchisation 27 hiérarchise ces données, suivant un ordre prédéfini dans lequel les données doivent être prises en compte pour l'application des méthodes de diagnostic.

Puis le bloc de sélection 28 sélectionne, pour chaque donnée de fonctionnement défectueux, une ou plusieurs méthodes d'aide au diagnostic qu'il convient le mieux d'appliquer, compte tenu du type de donnée considérée.

Puis, pour chacune des données de fonctionnement défectueux successives, prises en compte dans l'ordre déterminé par hiérarchisation, l'un au moins des blocs 29-31 exécute sa méthode d'aide au diagnostic afin d'aider l'utilisateur du dispositif 40 à établir un diagnostic.

Dans le cas où le premier module 32 d'aide au diagnostic identifie au moins un dysfonctionnement, l'unité centrale 1 signale le dysfonctionnement à l'utilisateur du dispositif 40, par le biais de l'interface utilisateur 39. L'utilisateur du dispositif 40 peut alors effectuer les réparations nécessaires.

Dans le cas où le premier module 32 d'aide au diagnostic n'identifie aucun dysfonctionnement et dans le cas où aucune donnée de fonctionnement défectueux du véhicule n'a été acquise, le bloc central de commande active le second module 35 d'aide au diagnostic.

Le bloc d'acquisition 23 établit des critères de sélection des données symptomatiques antérieures, à l'aide des données symptomatiques fournies par l'utilisateur du véhicule et, le cas échéant, des données de fonctionnement défectueux du véhicule. Puis le bloc 23 appelle le central distant 41, à travers le réseau 100, et lui adresse une requête de téléchargement des données symptomatiques antérieures pertinentes et des données de dysfonctionnements correspondants. Le central distant 41 transmet les données requises au bloc d'acquisition 23, à travers le réseau 100. Les données reçues sont mémorisées dans la mémoire 24.

Le bloc de comparaison 33 compare les données symptomatiques antérieures avec les données de fonctionnement défectueux du véhicule et, le cas échéant, avec les données symptomatiques fournies par l'utilisateur du véhicule.

En cas de similitude entre, d'une part, une donnée de fonctionnement défectueux ou une donnée symptomatique d'utilisateur et, d'autre part, une donnée symptomatique antérieure, le bloc 34 extrait de la mémoire 24 la donnée de dysfonctionnement correspondant à cette donnée symptomatique antérieure et signale le dysfonctionnement à l'utilisateur du dispositif 40, par le biais de l'interface utilisateur 39.

L'utilisateur du dispositif 40 peut alors effectuer les réparations nécessaires.

Après avoir identifié le dysfonctionnement, l'utilisateur transmet au central distant 41 des informations indiquant la nature de ce dysfonctionnement, ainsi que ses effets, c'est-à-dire les symptômes qu'il a provoqués, afin d'enrichir la base de données 42.

Dans la description qui vient d'être faite, l'unité centrale 1 est reliée au module 2 d'interface de liaison avec le véhicule, par liaison filaire via un bus USB, et, d'autre part, au module 3 d'interface de liaison avec des outils de prise de données de fonctionnement du véhicule et au réseau de transmission 100, par liaisons radio. On pourrait bien sûr envisager de relier l'unité centrale au réseau de transmission de données et aux deux modules d'interface par tous autres moyens de liaison, radio ou filaire.

Dans une autre forme de réalisation, la détection des données de fonctionnement défectueux du véhicule est effectuée côté véhicule, par exemple par les calculateurs, et le bloc d'acquisition de données de fonctionnement du véhicule est destiné à n'acquérir que les données de fonctionnement défectueux du véhicule.

On pourrait également envisager de relier le module d'interface de liaison à d'autres éléments destinés à fournir des données de fonctionnement du véhicule, tels qu'un analyseur de gaz, un testeur de faisceaux électriques, etc..

Dans la description qui vient d'être faite, les méthodes d'aide au diagnostic (29-31) sont propres à un constructeur particulier de véhicules automobiles. En d'autres termes, il s'agit de méthodes utilisables exclusivement pour des véhicules de ce constructeur. En variante, le dispositif de l'invention est utilisable par une différents constructeurs automobiles et comprend, pour chacun de ces constructeurs, au moins un bloc pour exécuter une méthode d'aide au diagnostic propre à ce constructeur.

Le dispositif de l'invention pourrait comprendre un lecteur de support informatique, par exemple un lecteur de CD-ROM (Compact Disc-Read Only Memory / disque compact-mémoire à lecture seule). Dans ce cas, certains blocs fonctionnels du dispositif pourraient être disponibles sur CD-ROM, pour reprendre cet exemple, au lieu d'être intégrés définitivement dans le dispositif. Pour utiliser le dispositif d'aide au diagnostic, il suffira à un utilisateur d'introduire le CD-ROM dans le lecteur de CD-ROM.

Enfin, dans l'exemple particulier de la description qui précède, le dispositif 40 télécharge, avec des données symptomatiques antérieures, des données de dysfonctionnement correspondantes. Le dispositif pourrait tout aussi bien ne télécharger que les données symptomatiques antérieures pertinentes, dans un premier temps, puis, après avoir identifié une donnée symptomatique antérieure similaire à une donnée de fonctionnement défectueux du véhicule ou à une donnée symptomatique d'utilisateur, adresser une requête au central distant pour télécharger la seule donnée de dysfonctionnement correspondant à la donnée symptomatique antérieure identifiée.

## Revendications

1. Dispositif d'aide au diagnostic d'au moins un dysfonctionnement d'un véhicule automobile, comprenant des moyens (18) d'acquisition de données symptomatiques fournies par un utilisateur du véhicule, des moyens (2, 13-16) d'acquisition de données de fonctionnement du véhicule, des moyens (22, 23) d'acquisition de données symptomatiques antérieures, relatives à des symptômes recueillis dans le passé causés par des dysfonctionnements connus, des premiers moyens (32) d'aide au diagnostic par application, pour chaque donnée de fonctionnement du véhicule, d'au moins une méthode prédéfinie d'aide au diagnostic, et des seconds moyens (35) d'aide au diagnostic par comparaison des données de l'un au moins des deux groupes, comprenant respectivement les données symptomatiques fournies par l'utilisateur du véhicule et les données de fonctionnement du véhicule, avec les données symptomatiques antérieures.

2. Dispositif selon la revendication 1, dans lequel il est prévu des moyens (15) de détection, parmi les données de fonctionnement du véhicule, de données de fonctionnement défectueux.

3. Dispositif selon la revendication 2, dans lequel les premiers moyens (32) d'aide au diagnostic comprennent des moyens (28) pour sélectionner, pour chacune desdites données de fonctionnement défectueux, l'une au moins d'une pluralité de méthodes d'aide au diagnostic qu'il convient d'appliquer.

4. Dispositif selon l'une des revendications 2 et 3, dans lequel les premier moyens (32) d'aide au diagnostic comprennent des moyens (28) pour hiérarchiser les données de fonctionnement défectueux du véhicule, suivant un ordre dans lequel lesdites données doivent être prises en compte pour appliquer des méthodes d'aide au diagnostic.

5. Dispositif selon l'une des revendications 1 à 4, dans lequel les premiers moyens (32) d'aide au diagnostic comprennent des moyens (29) pour appliquer une méthode d'aide au diagnostic utilisant des arbres de décisions.

6. Dispositif selon l'une des revendications 1 à 5, dans lequel les premiers moyens (32) d'aide au diagnostic comprennent des moyens (30) pour appliquer une méthode d'aide au diagnostic utilisant un système expert.

7. Dispositif selon l'une des revendications 1 à 6, dans lequel les premiers moyens (32) d'aide au diagnostic comprennent des moyens (31) pour appliquer une méthode d'aide au diagnostic destinée à préconiser l'utilisation d'outils de prise de données de fonctionnement du véhicule.

8. Dispositif selon l'une des revendications 1 à 7, dans lequel les moyens (22, 23) d'acquisition de données symptomatiques antérieures comprennent des moyens (22) de liaison à des moyens distants (41) de stockage desdites données.

9. Dispositif selon l'une des revendications 1 à 8, dans lequel il est prévu des moyens de commande destinés à activer les premiers moyens (32) d'aide au diagnostic prioritairement aux seconds moyens (35) d'aide au diagnostic.

10. Dispositif selon l'une des revendications 1 à 9, dans lequel il est prévu des moyens de commande destinés à activer les seconds moyens (35) d'aide au diagnostic dans le cas où aucune donnée de fonctionnement défectueux du véhicule n'a été acquise.

11. Dispositif selon l'une des revendications 1 à 10, dans lequel il est prévu des moyens de commande destinés à activer les seconds moyens (35) d'aide au diagnostic dans le cas où les premiers moyens (32) d'aide au diagnostic n'ont permis d'identifier aucun dysfonctionnement.

12. Dispositif selon l'une des revendications 1 à 11, dans lequel il est prévu un premier module d'interface (2), de liaison à au moins un élément du véhicule destiné à fournir des données de fonctionnement du véhicule, un second module d'interface (3), de liaison à des outils de prise de données de fonctionnement du véhicule, et une unité centrale (1) intégrant les premiers et les seconds moyens (32, 35) d'aide au diagnostic.

13. Dispositif selon la revendication 12, dans lequel le premier module (2) d'interface de liaison est agencé pour être relié à au moins un organe de commande du véhicule.

14. Dispositif selon l'une des revendications 12 et 13, dans lequel le premier module (2) d'interface de liaison est agencé pour être relié à au moins un bus de transmission de données de fonctionnement du véhicule.

15. Dispositif selon l'une des revendications 12 à 14, dans lequel l'unité centrale (1) et l'un au moins des modules d'interface (2, 3) sont reliés l'un à l'autre par liaison radio.

16. Dispositif selon l'une des revendications 12 à 15, dans lequel l'unité centrale (1) est reliée à un réseau (100) de transmission de données par liaison radio.

## Patentansprüche

1. Hilfseinrichtung zur Diagnose mindestens einer Kraftfahrzeugstörung, enthaltend Mittel (18) zum Erfassen von von einem Nutzer des Fahrzeugs zur Verfügung gestellten symptomatischen Daten, Mittel (2, 13-16) zum Erfassen von Funktionsdaten des Fahrzeugs, Mittel (22, 23) zum Erfassen früherer symptomatischer Daten, die sich auf in der Vergangenheit aufgenommene und durch bekannte Störungen verursachte Symptome beziehen, erste Mittel (32) zur Diagnosehilfe durch Anwendung wenigstens eines vorgegebenen Diagnosehilfeverfahrens auf jedes Funktionsdatum des Fahrzeuges und zweite Mittel (35) zur Diagnosehilfe durch Vergleich von Daten wenigstens einer von zwei Gruppen, enthaltend die vom Nutzer des Fahrzeugs zur Verfügung gestellten symptomatischen Daten bzw. die Funktionsdaten des Fahrzeugs, mit den früheren symptomatischen Daten.

2. Einrichtung nach Anspruch 1, wobei Mittel (15) zum Erkennen von Fehlfunktionsdaten unter den Funktionsdaten des Fahrzeuges vorgesehen sind.

3. Einrichtung nach Anspruch 2, wobei die ersten Diagnosehilfemittel (32) Mittel (28) zur Auswahl von mindestens einem aus einer Mehrzahl von Diagnosehilfeverfahren für jedes Fehlfunktionsdatum aufweisen.

4. Einrichtung nach Anspruch 2 oder 3, wobei die ersten Diagnosehilfemittel (32) Mittel (28) zum hirachischen Gliedern der Fehlfunktionsdaten des Fahrzeugs in einer Ordnung aufweisen, in der die genannten Daten berücksichtigt werden müssen, um Diagnosehilfeverfahren anzuwenden.

5. einrichtung nach einem der Ansprüche 1 bis 4, wobei die ersten Diagnosehilfemittel (32) Mittel (29) zum Anwenden eines Endscheidungsbäume verwendenden Diagnosehilfeverfahrens enthalten.

6. Einrichtung nach einem der Ansprüche 1 bis 5, wobei die ersten Diagnosehilfemittel (32) Mittel (30) zum Anwenden eines ein Expertensystem verwendenden Diagnosehilfeverfahrens enthalten.

7. Einrichtung nach einem der Ansprüche 1 bis 6, wobei die ersten Diagnosehilfemittel (32) Mittel (31) zum Anwenden eines Diagnosehilfeverfahrens enthalten, das zum Empfehlen der Verwendung von Hilfsmitteln zur Erfassung von FahrzeugBetriebsdaten bestimmt ist.

8. Einrichtung nach einem der Ansprüche 1 bis 7, wobei die Mittel (22, 23), zum Erfassen früherer symptomatischer Daten Mittel (22) zum Verbinden mit beabstandeten Speichermitteln (41) der genannten Daten aufweisen.

9. Einrichtung nach einem der Ansprüche 1 bis 8, wobei Anweisungsmittel vorgesehen sind, die zum Aktivieren der ersten Diagnosehilfemittel (32) mit Priorität zu den zweiten Diagnosehilfemitteln (35) bestimmt sind.

10. Einrichtung nach einem der Ansprüche 1 bis 9, wobei Anweisungsmittel vorgesehen sind, die zum Aktivieren der zweiten Diagnosehilfemittel (35) in dem Fall bestimmt sind, daß keine Fehlfunktionsdaten des Fahrzeuges erfaßt worden sind.

11. Einrichtung nach einem der Ansprüche 1 bis 10, wobei Anweisungsmittel vorgesehen sind, die zum Aktivieren der zweiten Diagnosehilfemittel (35) in dem Fall bestimmt sind, daß die ersten Diagnosehilfemittel (32) keine Erkennung einer Fehlfunktion ermöglichten.

12. Einrichtung nach einem der Ansprüche 1 bis 11, wobei ein erstes Schnittstellenmodul (2), das mit wenigstens einer zur Lieferung von Betriebsdaten des Fahrzeugs bestimmten Fahrzeugelement verbunden ist, ein zweites Schnittstellenmodul (3), das mit den Hilfsmitteln zum Erfassen von Betriebsdaten des Fahrzeugs verbunden ist, und eine die ersten und die zweiten Diagnosehilfemittel (32, 35) integrierende Zentraleinheit (1) vorgesehen sind.

13. Einrichtung nach Anspruch 12, wobei das erste Anschlußschnittstellenmodul (2) so angeordnet ist, daß es mit wenigstens einer Steuereinheit des Fahrzeugs verbunden ist.

14. Einrichtung nach Anspruch 12 oder 13, wobei das erste Anschlußschnittstellenmodul (2) so angeordnet ist, daß es mit wenigstens einem Betriebsdaten des Fahrzeugs übertragenden Bus gekoppelt ist.

15. Einrichtung nach einem der Ansprüche 12 bis 14, wobei die Zentraleinheit (1) und wenigstens eines der Schnittstellenmodule (2, 3) durch Funkverbindung miteinander verbunden sind.

16. Einrichtung nach einem der Ansprüche 12 bis 15, wobei die Zentraleinheit (1) über eine Funkverbindung mit einem Datenübertragungsnetzwerk (100) verbunden ist.

## Claims

1. Diagnostic aid device for at least one automobile malfunction comprising means (18) for acquiring symptomatic data provided by a user of the vehicle, vehicle operational data acquisition means (2, 13-16), means (22, 23) for acquiring earlier symptomatic data relating to symptoms collected in the past caused by known malfunctions, first means (32) for aiding diagnosis by application, for each vehicle operational datums of at least one predefined diagnostic aid method, and second means (35) for aiding diagnosis by comparing the data from at least one of the two groups, respectively comprising the symptomatic data provided by the user of the vehicle and the vehicle operational data, with earlier symptomatic data.

2. Device as claimed in Claim 1, wherein means (15) are provided for detecting data indicating faulty operation among the vehicle operational data.

3. Device as claimed in Claim 2, wherein the first diagnostic aid means (32) comprise means (28) for selecting, for each of the said faulty operation data, at least one method from a plurality of diagnostic aid methods which is suitable to be applied.

4. Device as claimed in any one of Claims 2 and 3, wherein the first diagnostic aid means (32) comprise means (28) for sorting the faulty operation data ofthe vehicle into a hierarchical order wherein the said data must be taken into account in order to apply the diagnostic aid methods.

5. Device as claimed in any one of Claims 1 to 4, wherein the first diagnostic aid means (32) comprise means (29) for applying a diagnostic aid method using decision trees.

6. Device as claimed in any one of Claims 1 to 5, wherein the first diagnostic aid means (32) comprise means (30) for applying a diagnostic aid method using an expert system.

7. Device as claimed in any one of Claims 1 to 6, wherein the first diagnostic aid means (32) comprise means (31) for applying a diagnostic aid method intended to recommend the use of tools for obtaining vehicle operational data.

8. Device as claimed in any one of Claims 1 to 7, wherein the earlier symptomatic data acquisition means (22, 23) comprise means (22) for connecting to remote means (41) storing said data.

9. Device as claimed in any one of Claims 1 to 8, wherein control means are provided which are intended to actuate the first diagnostic aid means (32) in preference and priority to the second diagnostic aid means (35).

10. Device as claimed in any one of Claims 1 to 9, wherein control means are provided which are intended to actuate the second diagnostic aid means (35) if no faulty vehicle operation data has been acquired.

11. Device as claimed in any one of Claims 1 to 10, wherein control means are provided which are intended to actuate the second diagnostic aid means (35) if the first diagnostic aid means (32) have not made it possible to identify any malfunction.

12. Device as claimed in any one of Claims 1 to 11, wherein a first interface module (2) for connection to at least one vehicle element which is intended to provide vehicle operational data, a second interface module (3) for connection to tools for obtaining vehicle operational data, and a central unit (1) integrating the first and second diagnostic aid means (32, 35) are provided.

13. Device as claimed in Claim 12, wherein the first connection interface module (2) is disposed so as to be connected to at least one vehicle control member.

14. Device as claimed in any one of Claims 12 and 13, wherein the first connection interface module (2) is disposed so as to be connected to at least one vehicle operational data transmission bus.

15. Device as claimed in any one of Claims 12 to 14, wherein the central unit (1) and at least one of the interface modules (2, 3) are connected to each other by means of a radio link.

16. Device as claimed in any one of Claims 12 to 15, wherein the central unit (1) is connected to a data transmission network (100) by means of a radio link.
